# EUROPEAN PATENT APPLICATION

(11) **EP 1 528 730 A2**
(43) Date of publication of application: **04.05.2005**
(21) Application number: 04025782.6
(22) Date of filing: 29.10.2004
(51) Int. Cl.: H04L 12/56

(54) **Fail-safe operation in a system with stack switches**

(30) Priority: 31.10.2003 US 516191 P; 31.12.2003 US 751098
(71) Applicant: Alcatel Internetworking, Inc., Calabasas, CA 91301 (US)
(72) Inventor: Mann, Harpal, Union City CA 94587 (US); Magret, Vincent, Oak Park, CA 91377 (US); Goodwin, Michele L., Westlake Village, CA 91361 (US); Guinee, Eric, 37000 Tours (FR); Le Guen, Ronan, 44240 La Chapell sur erde (FR)
(74) Representative: Dreiss, Fuhlendorf, Steimle & Becker

(57) **Abstract**

The invention integrates a plurality of separate stack switches into a unified system of switches under a common configuration and management architecture. The switches, preferably stack switches, may be distributed throughout a local area network (LAN) and need not be co-located. One preferred embodiment supports fail-safe operations to minimize the disruption caused when a stack switch becomes inoperative. In another preferred embodiment, the stack switches are enabled with a system-wide address table and quality of service mapping matrix with which each switch can effectively provision system bandwidth.

## Description

### CROSS REFERENCE TO RELATED APPLICATION

This application claims the benefit of U.S. Provisional Patent Application Ser. No. 60/516,191, to Harpal Mann, entitled, "VIRTUAL CHASSIS FOR CONTINUOUS SWITCHING," filed October 31, 2003.

### FIELD OF INVENTION

The invention relates to the integration of a system of stackable data switches. In particular, the invention relates to a method and system for providing management of and switching between a plurality of stackable switches.

### BACKGROUND

In data communication networks, packet switches, including multi-layer switches and routers, are used to operatively couple many nodes for purposes of communicating packets of information. Switches that are made to stand alone without relying on a shared backplane have a plurality of ports and an internal switching fabric for directing inbound packets received at ingress port to the appropriate egress port. In some implementations in the art, the switching capacity is enhanced by linking a plurality of stand-alone switches by operatively linking selected ports of the switches together so as to create a ring. These switches, sometimes called stack switches, are often employed together at a customer's premises. Unfortunately, even when operatively coupled, the system of stack switches retain many of the attributes and shortcomings of the individual switches themselves. For example, a network administrator must generally manage each switch as a separate device. Also, switching between two stack switches is substantially identical the manner of switching between two wholly independent switches. There is therefore a need for a means to simplify management functions and exploit the system of interconnected switches to more effectively integrate and allocate resources between them.

### SUMMARY

The preferred embodiment integrates a plurality of separate stack switches into a unified system of switches under a common configuration and management architecture, thereby creating a system of switches giving the appearance of a virtual chassis. The switches, preferably stack switches, may be distributed throughout a local area network (LAN) and need not be co-located. The preferred embodiment also supports fail-safe operations in a distributed switching environment for purposes of minimizing the disruption caused when a stack switch becomes inoperative due to a denial-of-service attack (virus), for example. In another preferred embodiment, the stack switches are enabled with a system-wide address table and quality of service mapping matrix with which each switch can effectively provision system bandwidth and other shared resources.

### BRIEF DESCRIPTION OF THE DRAWINGS

The present invention is illustrated by way of example and not limitation in the figures of the accompanying drawings, and in which:
- FIG. 1: is a functional block diagram of a system of switches with which the integrated switch management system (ISMS) of the preferred embodiment may be employed;
- FIG. 2: is a functional block diagram of a stack switching device, according to the preferred embodiment of the present invention;
- FIG. 3: is a schematic diagram of a plurality of switching devices operatively coupled to one another, accordance with the preferred embodiment of the present invention; and
- FIG. 4: is a flowchart of the integrated switch management method, according to the preferred embodiment of the present invention.

### DESCRIPTION OF PREFERRED EMBODIMENT

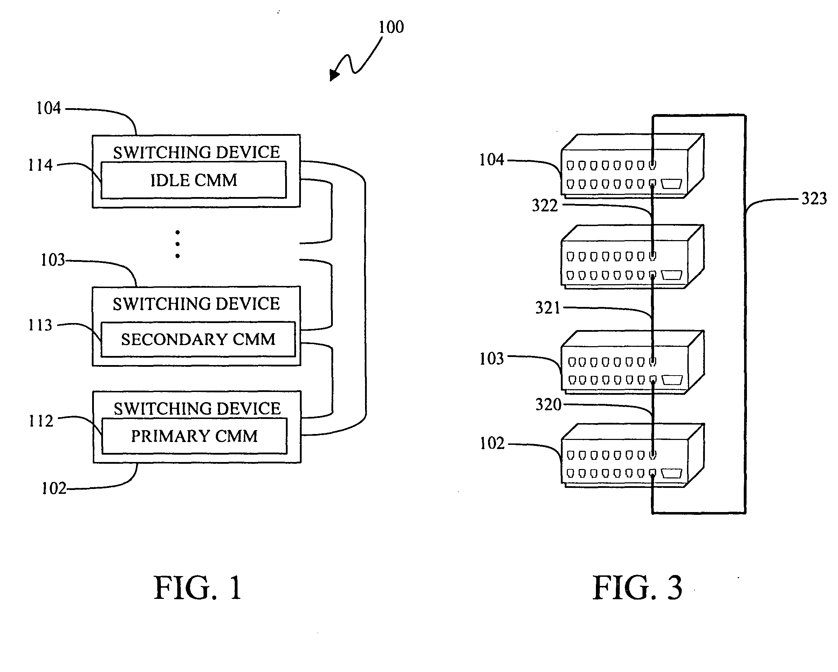

Illustrated in FIG. 1 is a functional block diagram of a system of switches with which the integrated switch management system (ISMS) of the preferred embodiment may be employed. The system of switch 100 comprises a plurality of switching devices 102-104 present in a packet-switched network. The network in the preferred embodiment may be embodied in or operatively coupled to the Internet Protocol (IP) network, a local area network (LAN), wide area network (WAN), metropolitan area network (MAN), or combination thereof.

In the preferred embodiment, the switching devices 102-104 are adapted to perform switching and routing operations with protocol data units (PDUs) at layer 2 (Data Link Layer) and layer 3 (Network Layer) as defined by the Open Systems Interconnect (OSI) reference model, although they may also perform layer 4-7 switching operations. The switching devices 102-104 are preferably stackable switches operatively coupled to one another through one or more ports referred to by those skilled in the art as stack ports. A stack port is preferably a standard network port, such as an Ethernet port defined in the Institute of Electrical and Electronics Engineers (IEEE) 802.3 standard, capable of supporting standard switching operations. Each of the stackable switching devices 102-104 is generally adapted to function as an element in an integral system of switches or as a stand-alone network bridge, switch, router, or multi-layer switch. Stackable switches generally possess an internal switch fabric operatively linking each port of the switch to every other port on the switch. There is however, no switch fabric linking the ports of the system of switches.

As is described in greater detail below, a plurality of the switching devices 102-104 possess a centralized management module (CMM) 112-114. The primary purpose of the CMM is to manage the system of switches 100, integrate switch resources throughout the system of switches 100, and synchronize the various resources across the system of switches 100. Once the resources in the system of switches 100 have been integrated and synchronized across each of the switching devices, the network administrator may view and manage the entire system of switches by merely interfacing with a single switching device.

At any given time, the CMM of only one of the plurality of switching devices is adapted to actively manage the systems of switches 100. This particular switching device, referred to herein as the primary switching device. A second switching device referred to as the secondary switching device may also be employed to provide redundancy. The CMM of the remaining switching devices remain idle until such time that its CMM is activated and made to serve as a primary CMM or secondary CMM.

The primary switching device 102 is distinguished from the other switching devices 103-104 by the present of an active CMM, referred to as the primary CMM 112. The primary CMM 112 is responsible for compiling topology information acquired by each of the other switching devices 103-104, propagating that information through the system of switches 100, and issuing CMM assignment messages used to establish the management hierarchy. In the preferred embodiment, a second switching device 103 with a secondary CMM 113 is adapted to take over as the primary CMM in case the primary CMM 112 fails or is otherwise unable to manage the system of switches 100. Each of the one or more remaining switching devices, excluding the primary switching device 102 and secondary switching device 103, are preferably enabled to perform as the primary or secondary CMM, although the CMM of these devices generally remain idle until made active.

The integrated switch management system of the preferred embodiment employs an identification scheme to uniquely identify each stack switch and define the default order with which primary management responsibilities are assigned. Although each of the stack switches is associated with the same IP address, each stack switch is assigned a unique identifier for purposes of management. In particular, each stack switch, also referred to as an element, is referenced by a switch element identifier. In the preferred embodiment, element identifiers are assigned via an element assignment mechanism configured to assign a default element number of "1" to the primary stack switch and a default element number of "2" to the secondary stack switch. If and when necessary, subsequent stack switches may be assigned the role of a primary or secondary CMM in consecutively higher numerical order. The element assignment mechanism, preferably a hardware mechanism, should remain static from one reboot to another, avoid disturbing an element assignment scheme for remaining element when a new element is added to or an existing element removed from the system of switches 100.

Using the element identifiers, a network administrator is provided a convenient interface with which to configure the system of switches 100 and enter management commands. To configure an existing port or add a port, for example, the administrator merely needs to specify a port number and the associated element number. As such, the overall configuration and management architecture used for a stackable system of switches is substantially similar to that used for an individual switch, thereby giving the administrator the perception of a system of switches integrated within a virtual chassis, independent of the spatial distribution of those elements and the absence of a shared backplane.

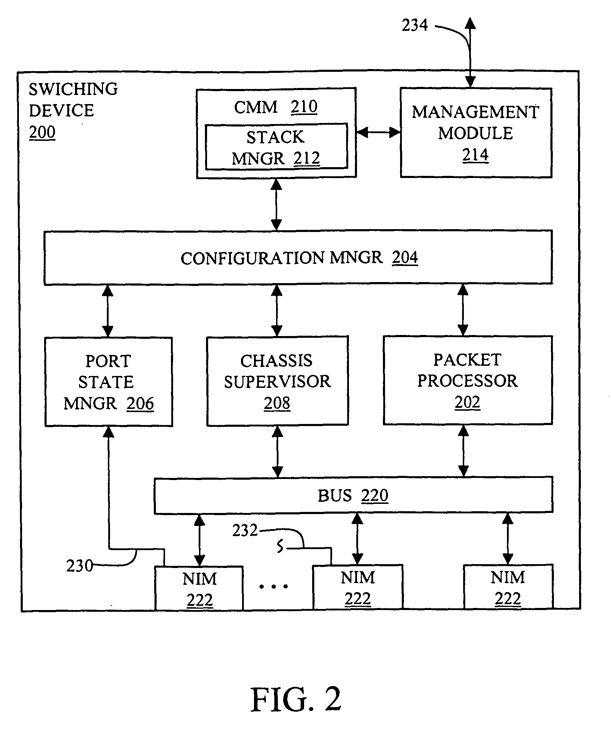

Illustrated in FIG. 2 is a functional block diagram of a stack switching device, according to the preferred embodiment. The switching device 200 preferably comprises a packet processor 202, configuration manager 204, port state manager 206, chassis supervisor 208, and CMM 210 including a stack manager 212. The packet processor 202 performs switching and or routing operations on PDUs received from the plurality of network interface modules (NIMs) 222 via the internal data bus 220. These operations include frame parsing, source learning, next-hop determination, classification, encapsulation, filtering, buffering, and scheduling at one or more OSI reference model layers.

The primary purpose of a CMM 210 is to execute various management operations necessary to integrate the switching operations of the system of switching devices 100, if and when assigned to do so. That is, the CMM 210 is active and operational only if and when it is designated as the primary CMM or secondary CMM. If not the primary or secondary CMM, the CMM preferably remains idle. The management operations centralized in CMM include synchronization of managed information present at each switching device, the list of managed information including but not limited to MAC addresses tables, routing tables, resolution protocol (ARP) tables, VLAN membership tables, access control list (ACL) rules, multicast groups membership tables, and link aggregation ports. Depending on the type of managed information, the primary CMM is configured to actively acquire and compile the information from the other switching devices, monitor for traps and other advertisements from other switching devices as to changes in the managed information at the device, or a combination thereof.

In the preferred embodiment, the CMM 210 further includes a stack manager 212 which, like the CMM, is present in each switching device of the system of switches 100 but only active on the primary CMM and, in some cases, the secondary CMM. The primary purpose of the stack manager 212 is to discover the topology of the virtual chassis, which is then reported to the chassis supervisor 208. A virtual chassis routing table that describes the topology may be used to determine the shortest path from one element to each other element. The discovery protocol is preferably a layer 2 protocol associated with a unique protocol identifier. The discovery messages may be distributed to a broadcast address until the MAC address of one or more elements are identified.

During the discovery phase, the stack manager learns information : MAC address, assigned slot number, number and type of ports about the different elements in the stack 100. The stack manager either determines that it knows the entire topology or a discovery timer expires and the proceeds to the second phase. In the second phase, management role is assigned to each element. There are three roles possible: primary CMM, secondary CMM and idle. The decision criteria used to make the assignment are preferably based on the element number. The element with the lowest slot number will be chosen to act as the primary CMM and the element with the next lowest slot number will be chosen to act as the secondary CMM.

In some embodiments, the stack manager 212 is also responsible for detecting a lost element, insertion of an additional element (causing a trap to be generated), removal of an element from the stack (causing the system to be shut down), determining the operational state of the associated CMM 210, and reporting above information to chassis supervisor 208.

The port state manager 206 in the preferred embodiment monitors the state of the plurality of network ports via port state signals 230, 232. The port state signals 230 alert the port state manager 206 when the associated communications link is disabled or otherwise inactive. As described in more detail below, the port state manager 206 is adapted to report link failures to the configuration manager 204 which in turn reports the failure to the primary CMM in the system of switches 100, for example. If the switching device is the primary switching device, the link failure is reported to the primary CMM 210. If the CMM or another switching device is serving as the primary CMM, the configuration manager 204 reports the link failure to the primary switching device in the form of a trap.

The chassis supervisor 208 in adapted to generate control messages used to inform one or more other switching devices of the CMM assignments. In particular, the chassis supervisor 208 corresponding to the primary CMM is responsible for informing each of the other switching devices in the system 100 of the identity of the primary CMM. In the preferred embodiment, the chassis supervisor 208 is enabled with communications protocol such as the International Electrical and Electronic Engineers (IEEE) standard known as the Inter-Processor Communication (IPC) protocol.

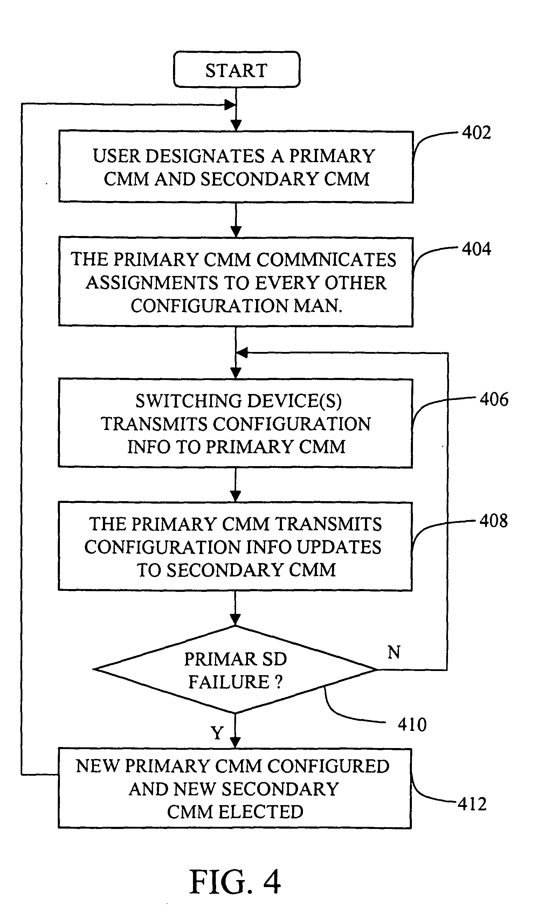

Illustrated in FIG. 3 is a schematic diagram of a plurality of switching devices operatively coupled to one another in accordance with the preferred embodiment of the present invention. The plurality of switching devices 102-104 of the system 100 are operatively coupled via a complete full duplex ring. The duplex ring comprises a duplex communications links 320-323, each of the communications links 320-323 being adapted to engage a network port at two of the plurality of switching devices 102-104. By coupling the switching devices 102-104 in this manner, a failure at any switching device or any communications links 320-323 can be bypassed by the operable switching devices with minimal disturbance to the network and to the ISMS.

Illustrated in FIG. 4 is a flowchart of the integrated switch management method, according to the preferred embodiment. In the CMM assignment step 402, the CMM of a first switching device 102 is assigned to serve as the primary CMM and the CMM of a second switching device assigned to serve as the secondary CMM. The assignment is preferably made via a mechanism, such as a hardware mechanism, that is less like to be inadvertently changed by a user.

Once the primary and secondary CMMs have been assigned, the primary CMM generates one or more assignment messages (step 404) sent to each of the other switching devices. The assignment messages notify each of the recipients of the primary CMM assignment. In the preferred embodiment, the stack manager associated with the primary CMM sends a message to the chassis supervisor with the CMM assignment and the list of elements present in the system 100. The IPC then communicates the information about the current topology to every other element. In the preferred embodiment, the information communicated to the other elements includes the element identification of the primary CMM and secondary CMM, and the identification of the local slot.

Upon receipt of the assignment message, the stack manager of the recipient element assigns the appropriate state or role to chassis supervisor. On elements that are neither primary nor secondary CMM, the stack manager causes the chassis supervisor to enter an idle mode. The idle mode allows the stack to reuse functionality provided by chassis supervision on elements that are not acting as the primary CMM.

As illustrating in updating step 406, the switching devices including the secondary CMM or one or more idle CMM(s) then report configuration information to the primary CMM for management purposes. The primary CMM in synchronizing step 408, then transmits the updated configuration information to the secondary CMM to synchronize their databases. The process by which configuration information updates are generated by the secondary CMM and idle CMM(s) and transmitted to the primary CMM is generally repeated until the failure detection step 410 is answered in the affirmative.

If and when a failure at the primary CMM, the secondary CMM in the preferred embodiment attempt to confirm that there is and actual failure using, for example, a keep-alive. Upon confirmation of the failure of the primary CMM or a communications link thereto, the secondary CMM assumes the role as the new primary CMM (step 412). The new secondary CMM is preferably determined using an election which may, for example, entail looking to the next element identification. The new primary CMM reports (step 402) the assignment of the new primary and secondary CMMs to the switching devices of the system of switches. The new secondary CMM is then prepared should the new primary fail and the ISMS fallback on the new secondary to, in turn, assume the responsibility of the primary CMM. In this manner, continuous virtual chassis switching operations may be maintained at all times.

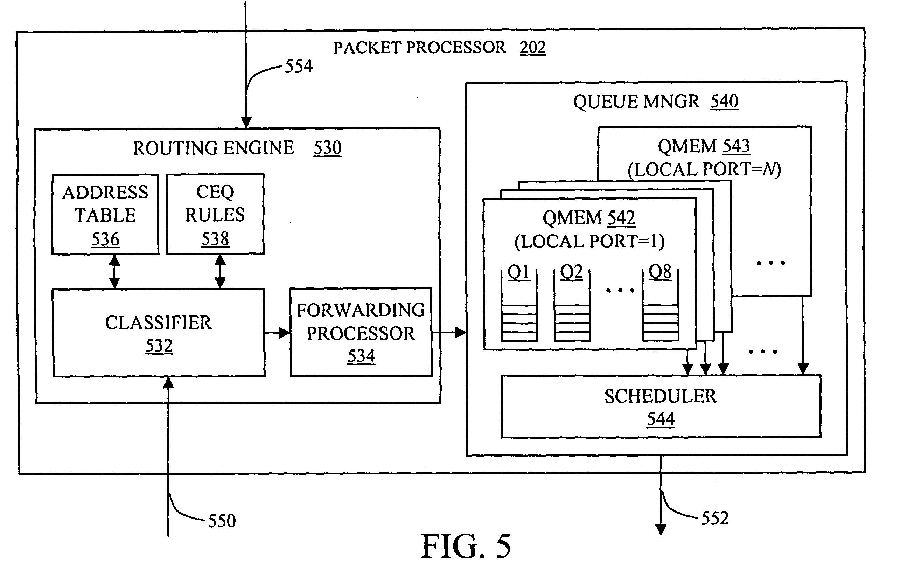

Illustrated in FIG. 5 is a packet processor for performing inter-element quality of service (QoS), according to the preferred embodiment. The packet processor 202 is adapted to emulate the switch fabric used to operatively coupled a plurality of blades in a chassis-based router configuration. The packet processor 202 generally includes a routing engine 530 and a queue manager 540. The routing engine 530 processes ingress data traffic 550 received from the plurality of network interface modules (NIMs) 222 via the data bus 220. The traffic is subsequently forwarded to the queue manager 540 that then transmits the data in the form of egress data traffic 552 to NIMs 222.

The routing engine 130 of the preferred embodiment comprises a classifier 532, a forwarding processor 534, address lookup table 536, and Cross-Element QoS (CEQ) rules 536. The classifier 532 generally extracts one or more fields of the ingress PDUs 550 including source and or destination addresses, protocol types, and priority information; searches the address table 536 to determine where the PDU is to be forwarded and, if applicable, the next-hop MAC address of the node to which the PDU is to be forwarded; and consults the CEQ rules 536 to prioritize the PDU based upon various criteria QoS policies generally defined by a network administrator.

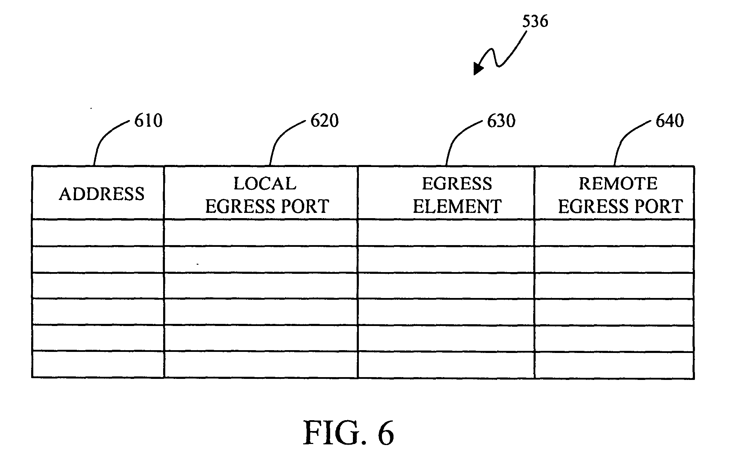

The address table 536, illustrated in greater detail in FIG. 6, generally comprises a first column of known MAC destination addresses 610 with which the classifier 532 compares the destination MAC address extracted from the ingress PDU. The list of known MAC address 610 preferably includes the addresses of each of the nodes reachable through all ports of each switching device present in the system of switches 100. If an exact match is found, the classifier 532 retrieves the local egress port 620 of the particular switching device from which the PDU is to be transmitted. If the destination node is reachable through one of the other switching devices in the system of switches 100, the address table 536 further includes an egress element number 630 and remote egress port number 640. The egress element number 630 represents the identifier of the element through which the PDU must pass en route to the destination node, while the remote egress port number 640 represents the egress port of the egress element 630 from which the PDU with destination address 610 is to be transmitted. The egress element 630 in the preferred embodiment may any of the plurality of switching devices in the system of switches 100. The element from which the egress element 630 receives the PDU is referred to herein as the ingress element.

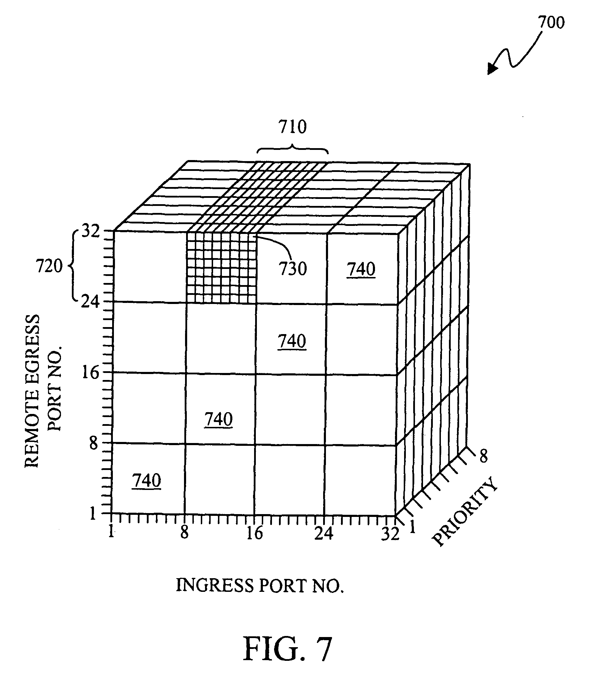

If a match is detected in the address table 536, the classifier 532 maps the flow into the appropriate flow category for purposes of applying QoS. In the preferred embodiment, the QoS polices are embodied in the Cross-Element QoS (CEQ) rules 538 that govern how a PDU propagates through the system of switches 100 as a function of the ingress element/ingress port, egress element/remote egress port, and priority. The CEQ rules 538 for a system of switches including four stackable switches, each stackable switching including eight Ethernet ports, are schematically represented in the 3-dimensional QoS matrix 700 of FIG. 7. The ingress switching element/port are represented on the ordinate axis, wherein port numbers 1-8 are associated with a first switching element, port numbers 9-16 are associated with a second switching element, port numbers 17-24 are associated with a third switching element, and port numbers 25-32 are associated with a fourth switching element. The egress switching port numbers ranging from 1-32 are analogous to the ingress port numbers and represented on the vertical axis. For each ingress port and egress port pair, the QoS matrix 700 in the preferred embodiment is further divided into eight possible priority values represented along the third dimension. The priority value generally corresponds to the inbound PDU priority such as the 802.1p priority. The appropriate QoS rule is retrieved from the OoS matrix 700 at the location identified by the associated combination of ingress port/remote egress port pair and priority.

If the ingress element and egress element are the same, the QoS rule or a pointer thereto is retrieved from one of the diagonal regions 740 of the QoS matrix 700 and subsequently used to define precedence by which the PDU is transmitted to the appropriate NUM 222. If the ingress element and egress element are different, the QoS rule or pointer is retrieved from one of the off-diagonal regions of the QoS matrix 700 and used to define the precedence by which the PDU is transmitted across one or more stack switch links between the ingress element and egress element. For example, the QoS rule associated with an ingress PDU with an 802.1p value=1 that is received on the seventh port (ingress port number=15) of the second switching element 710 and destined for the eighth port (egress port number=32) of the fourth switching element 720 is retrieved from the memory cell associated with point 730.

In the preferred embodiment, the QoS rule comprises a weight used to queue the PDU within the system of switches 100. This internal queue weight, in particular, defines the precedence afforded to the PDU in transit from the ingress switching element to the egress switching element. The internal queue weights in the preferred embodiment are correlated with the priorities of the local egress port queues Q1-Q8, and may be the same or different than that of the priority associated with the ingress PDU.

Once the classifier 532 has identified, at the least, the local egress port and internal queue weight from the CEQ rules 538, the forwarding processor 534 generally performs some or all packet manipulation necessary to prepare the data for transmission to the next node. This may include, for example, re-encapsulation of a Network Layer packet with a new Data Link Layer header including the MAC address of the node to which the packet is to be forwarded next. In some embodiments, the forwarding processor 534 appends an operations code to the frames propagating to an egress element to signal any intermediate elements that the frame is to be passed through to the port in the direction of the egress element. The operations code may then be removed at the egress element prior to switching the frame to the remote egress port previously identified.

After the forwarding processor 534, the PDUs of the ingress flow are then passed from the routing engine 530 to the queue manager 540 where they are buffered prior to transmission to the appropriate local egress port. The queue manager 540 is comprised of a plurality of queue memories (QMEMs) 542-543 and a queue scheduler 544. Each queue memory 542-543 is associated with a local egress port and includes a plurality of packet buffers, i.e., queues Q1-Q8. The PDUs are then buffered in one of the priority queues Q1-Q8 associated with the internal queue weight. Packets destined for an egress element are queued in a queue memory associated with one of two stack ports. Which of the two ports represents the shortest path between the ingress element and egress element is generally determined by the virtual chassis routing table.

The queue scheduler 544 then coordinates the output of PDUs from the plurality of queues Q1-Q8 of each of the queue memories 542-543. In the preferred embodiment, the scheduler 544 performs time division multiplexing of the element output, each queue being afforded a quantity of bandwidth correlated with the priority level of the queue and number of queues at that priority. Any one of various queue-weighting schemes may be employed to efficiently utilize the bandwidth while simultaneously optimizing the fairness with which the queues are allocated fractional portions of the bandwidth. Weighted Fair Queueing (WFQ) and round robin are two of the most notable queuing schemes with which the invention may be implemented.

The different queues associated with each ingress/egress element pairs may then be grouped according to priority to ensure that the highest priority traffic is given the proper precedence over lower priority traffic. For example, the highest priority queue, Q1, associated with each pair of ingress/egress elements may be serviced by the scheduler 544 in a round robin manner until the queues are empty. After the highest priority, the scheduler may proceed to service the next lower priority queue associated with each ingress/egress element pair using round robin again. Each lower level of priority may then be serviced before returning to the highest priority queues again.

Although the description above contains many specifications, these should not be construed as limiting the scope of the invention but as merely providing illustrations of some of the presently preferred embodiments of this invention.

Therefore, the invention has been disclosed by way of example and not limitation, and reference should be made to the following claims to determine the scope of the present invention.

## Claims

1. A method to provide for fail-safe operation in a system of stack switches, the method comprising:
a) assigning a unique identifier to each of a plurality of stack switches, the identifiers specifying a management hierarchy of the respective switches;
b) assigning one or more stack management functions to a first stack switch of the plurality of stack switches, the first stack switch being the first in the management hierarchy of the plurality of stack switches;
c) if the first stack switch is unable to execute the one or more stack management functions, automatically assigning said one or more management functions to a second stack switch of the plurality of stack switches, the second stack switch being the second in the management hierarchy of the plurality of stack switches.

2. The method of claim 1, wherein the stack management functions comprise synchronizing one or more databases maintained by one or more of the plurality of stack switches.

3. The method of claim 2, wherein the one or more databases comprise topology information for the plurality of stack switches.

4. The method of claim 3, wherein the topology information comprises addresses of substantially all nodes reachable through a port of any switch of the plurality of stack switch.

5. The method of claim 4, wherein the addresses of the nodes are media access control (MAC) addresses.

6. A stack switch in a plurality of stack switches adapted to provide for fail-safe operation, the stack switch comprising:
a) a plurality of ports comprising at least one stack port operatively coupling the stack switch to the plurality of stack switches; and
b) a communication management module associated with a unique identifier specifying a management hierarchy of the stack switch with respect to the plurality of stack switches;
c) wherein the communication management module is adapted to perform one or more stack switch management functions if and when the stack switch becomes first in the management hierarchy of the plurality of stack switches.

7. The stack switch of claim 6, wherein the one or more stack switch management functions comprises synchronizing managed information of the plurality of stack switches.

8. The stack switch of claim 7, wherein said managed information comprises topology information associated with each of the plurality of switches.

9. The stack switch of claim 6, wherein the stack switch further comprises a stack manager adapted, if and when the stack switch becomes first in the management hierarchy of the plurality of stack switches, to:
a) discover a topology of the plurality of stack switches; and
b) generate a shortest path between each pair of stack switches of the plurality of stack switches.

10. The stack switch of claim 9, wherein the stack manager is further adapted, if and when the stack switch becomes first in the management hierarchy of the plurality of stack switches, to detect the insertion or removal of a stack switch of the plurality of stack switches.
